# EUROPEAN PATENT APPLICATION

(11) **EP 2 063 160 A1**
(43) Date of publication of application: **27.05.2009**
(21) Application number: 07022549.5
(22) Date of filing: 21.11.2007
(51) Int. Cl.: F16K 27/02

(54) **A valve assembly and control system**

(71) Applicant: O'Reilly, Edward, Dublin 12 (IE)
(72) Inventor: O'Reilly, Edward, Dublin 12 (IE)
(74) Representative: O'Neill, Brian

(57) **Abstract**

The present invention relates to a three-in-one valve comprising an inlet shutoff valve (12) for shutting off flow to an inlet of the valve, an outlet shutoff valve (30) for shutting off flow into an outlet of the valve and a control valve (40) for opening and closing the valve. During operation, the control valve can be opened and closed while the inlet shut off valve and outlet shut off valve are in an open position. The inlet shutoff valve and outlet shutoff can be closed for preventing flow into the control valve, thereby allowing the control valve to be serviced without draining of an attached fluid system, such as a radiator. In one embodiment, the three-in-one valve can be used to provide individual zone control for an individual radiator in a multi-radiator and boiler recirculating system.

## Description

### Field of the Invention

The present invention relates to a three-in-one valve assembly in which a single valve assembly includes three independently controlled valve portions to close various aspects of the valve assembly.

### Background of the invention

Typical heating systems include a central valve for controlling a flow to plurality of radiators. A thermostat is used to regulate control of the control valve. Accordingly, all radiators are shut down and air is bled upon closing of the control valve.

It is desirable to provide an individually controlled valve assembly to allow a single fluid source, such as a radiator, to be controlled upon control of the valve assembly.

### Summary of the Invention

According to the present invention there is provided a valve assembly comprising an inlet and an outlet; an inlet shutoff valve for shutting off flow through the inlet; an outlet shutoff valve for shutting off flow through the outlet; and a control valve for permitting and preventing flow between the inlet and the outlet.

During operation, the control valve can be opened and closed while the inlet shut off valve and outlet shut off valve are in an open position, in order to respectively permit and prevent flow of fluid from the inlet to the outlet of the valve assembly. The inlet shutoff valve and outlet shutoff can be closed for preventing flow into the control valve, thereby allowing the control valve to be serviced without draining of an attached fluid system, such as a radiator.

In one embodiment, the valve assembly can be used to provide individual zone control for an individual radiator in a multi-radiator and boiler recirculating system.

In one embodiment, the inlet shutoff valve comprises a plug movably mounted at least partially within the inlet. The plug is fitted within the inlet and a cap is preferably fitted over the plug. The plug can be turned by a suitable tool such as an allen key or screwdriver for moving the plug with the inlet to close the inlet.

In one embodiment, the outlet shutoff valve comprises a butterfly valve for preventing back flow from the outlet into the valve. The butterfly valve comprises a rotatable butterfly disc for closing or opening the outlet.

In one embodiment, the control valve comprises a diaphragm valve. Preferably, the diaphragm valve comprises a diaphragm positioned within a body of the valve assembly and displaceable between open and closed positions respectively permitting and preventing flow between the inlet and the outlet of the valve assembly.

Preferably, the diaphragm defines an upper chamber and a lower chamber within the valve body.

Preferably, the diaphragm includes an aperture positioned to enable fluid flow from the inlet to pass between said lower chamber and said upper chamber for equalizing pressure on either side of the diaphragm.

Preferably, the valve assembly further comprises a bi-stable solenoid coupled to the diaphragm, said bi-stable solenoid being actuatable to displace the diaphragm between the open and closed positions.

Preferably, the valve assembly further comprises a remote controlled control system for operating the control valve.

Preferably, the control system comprises a valve controller coupled to the control valve and a main control unit communicating with the valve control unit.

Preferably, the valve assembly further comprises a remote control unit, the remote control unit communicating with the main control unit.

Preferably, the main control unit communicates wirelessly to the valve controller and/or the remote controller.

Preferably, the inlet opens onto the lower chamber, a flared transition being provided between the inlet and the lower chamber.

Preferably, the lower chamber is in the shape of a substantially annular channel.

Preferably, the lower chamber is disposed substantially concentrically about an entrance to the outlet of the valve assembly.

Preferably, the entrance to the outlet is defined by an upstanding rim, and the diaphragm comprises a correspondingly shaped and dimensioned recess for at least partially receiving the rim when the diaphragm is in the closed position.

Preferably, the valve body comprises a valve cap removably mounted to the body to provide access to the control valve.

The invention will be more fully described by reference to the following drawings.

### Brief Description of the Drawings

Fig. 1 is a schematic diagram of a valve assembly in accordance with the teachings of the present invention, in which a solenoid forming part of the assembly has been omitted.
Fig. 2 is a schematic perspective view of the valve assembly.
Fig. 3A is an end view of an end cap.
Fig. 3B is a side elevational view of the end cap.
Fig. 4A is an end view of a plug.
Fig. 4B is a side elevational view of the plug.
Fig. 5A is a plan view of a butterfly disc.
Fig. 5B is an edge view of the butterfly disc.
Fig. 6A is a plan view of a butterfly axle.
Fig. 6B is a side view of the butterfly axle.
Fig. 7A is a plan view of a butterfly screw.
Fig. 7B is a side view of the butterfly screw.
Fig. 8A is a plan view of a butterfly O-seal.
Fig. 8B is a side view of the butterfly O-seal.
Fig. 9A is a schematic diagram of a top portion of a body cap.
Fig. 9B is a schematic diagram of a bottom portion of the body cap.
Fig. 10A is a plan view of the bottom portion of the body cap.
Fig. 10B is a sectional view of the body cap shown in Fig. 10A.
Fig. 10C is a side view of the body cap.
Fig. 11 is a schematic perspective view of the valve assembly including the control valve.
Fig. 12A is a schematic view of the valve body including a lower chamber.
Fig. 12B is a cross-sectional view of the valve body of Fig. 12A.
Fig. 12C is a top plan view of the lower chamber of the valve body.
Fig. 12D is a bottom plan view of the valve body.
Fig. 13A is a top plan view of the valve body.
Fig. 13B is a sectional view taken along line 13B-13B of Fig. 13A.
Fig. 13C is a sectional view taken along line 13C-13C of Fig. 13A.
Fig. 13D is a sectional view taken along line 13D-13D of Fig. 13A.
Fig. 13E is a sectional view of the valve body.
Fig. 13F is a sectional view taken along line 13F-13F of Fig. 13E.
Fig. 14 is a schematic view of operation of an open inlet shutoff valve and an open outlet shutoff valve.
Fig. 15 is a schematic view of operation of a closed inlet shutoff valve and closed outlet shutoff valve.
Fig. 16 is a schematic view of operation of an open control valve with a diaphragm omitted for clarity.
Fig. 17 is a schematic diagram of a control system for use with the valve assembly of the present invention.
Fig. 18 is a schematic diagram of an embodiment of a panel to be used with the control system of the present invention.
Fig. 19A illustrates use of the valve assembly coupled to a radiator.
Fig. 19B illustrates use of the valve assembly at an inlet to a radiator.
Fig. 19C illustrates use of the valve assembly at outlets of a boiler manifold.

### Detailed Description of the drawings

Reference will now be made in greater detail to a preferred embodiment of the invention, an example of which is illustrated in the accompanying drawings. Wherever possible, the same reference numerals will be used throughout the drawings and the description to refer to the same or like parts.

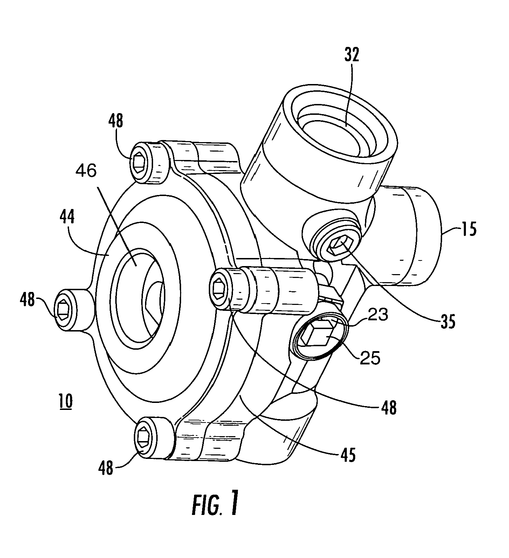

Fig. 1 is a schematic view of three-in-one valve assembly 10 in accordance with the teachings of the present invention. Valve assembly 10 includes an inlet 15 and an outlet 32 between which, during normal operation of the valve assembly 10, fluid such as heater water can flow. Thus for example the valve assembly 10 may be mounted to a radiator (not shown) or the like, with the inlet 15 being connected by any suitable coupling (not shown) to in-situ pipe work supplying heated water, and the outlet 32 being connected by any suitable coupling (not shown) to an inlet of the radiator. Heated water, as will be described hereinafter, can then flow from the inlet 15, through the valve assembly 10, and out the outlet 32 into the radiator to effect heating of same.

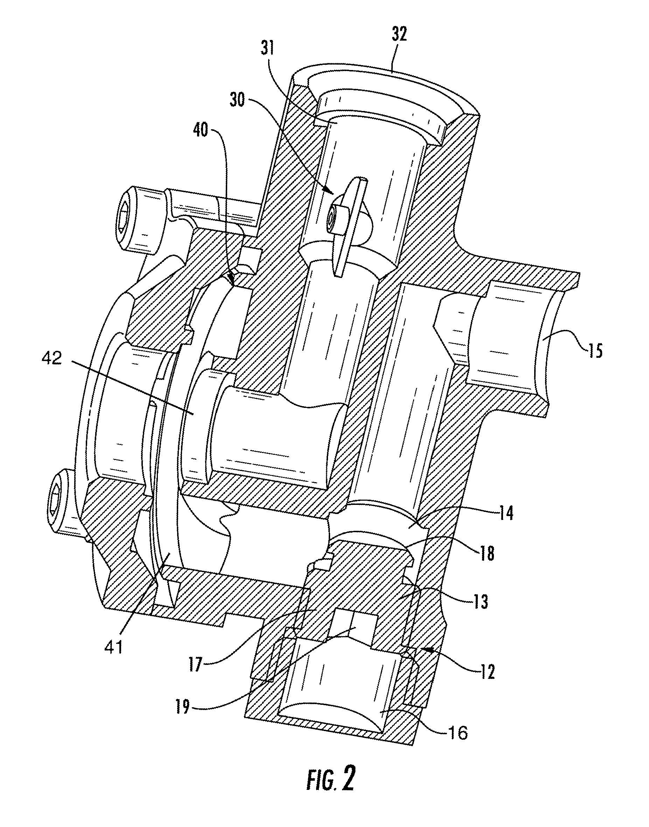

The valve assembly 10 further comprises an inlet shutoff valve 12, outlet shutoff valve 30 and control valve 40, as shown in Fig. 2. As described below in greater detail, inlet shutoff valve 12, outlet shutoff valve 30 and control valve 40 can be individually controlled, in particular to allow the control valve 40 to be isolated for servicing purposes.

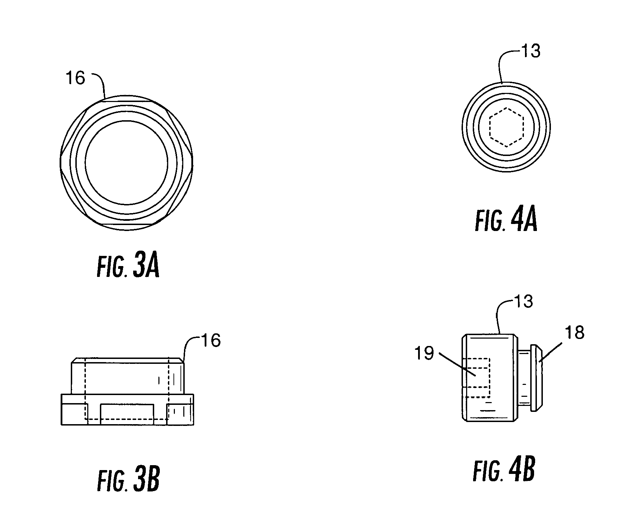

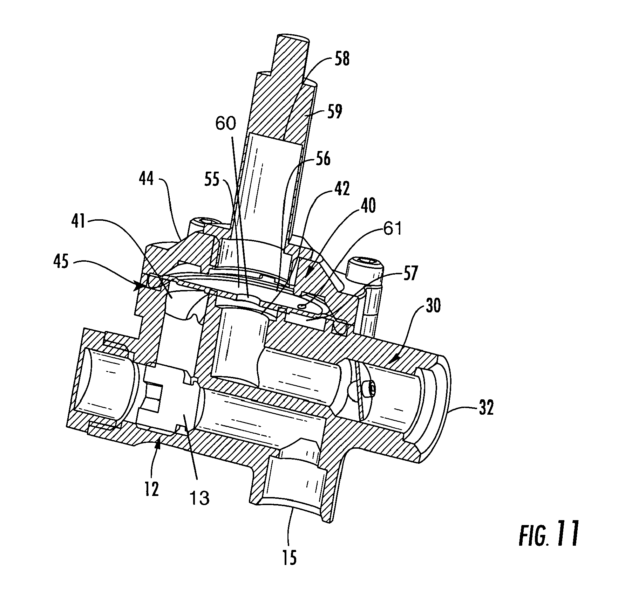

In one embodiment, the inlet shutoff valve 12 comprises a plug 13 which is preferably covered during normal use by an end cap 14. The plug 13 is movably mounted at least partially within the valve assembly 10 such as to face towards, and be engageable against, an internal shoulder 14 of the inlet 15 such as to occlude the inlet 15 to prevent fluid flow through the valve assembly 10. To this end the plug 13 preferably has a corresponding shaped head 18 which may be seated in sealing engagement with the shoulder 14. In the preferred embodiment illustrated a body 17 of the plug 13 is threaded into the valve assembly 10 and includes a hexagonal cavity 19 for receiving an allen or hex key therein, although it will be appreciated that the cavity 19 could be adapted to receive the head of a screwdriver or any other suitable tool. In this way by removing the end cap 16 the plug 13 can be threaded from the open position illustrated in Fig. 2 to the closed position illustrated in Fig. 11. The end cap 16, as shown in Figs. 3A-3B, is preferably hollow and dimensioned to partially receive the plug 13 therein when in the open position. The end cap 14 prevents leakage of fluid which may over time seep past the plug 13 from the inlet 15. An o-ring (not shown) may be provided around the exterior portion of the end cap 16 in order to provide a fluid tight seal between the end cap 16 and the valve assembly 16 such as to prevent the leaking of any fluid past the end cap 16.

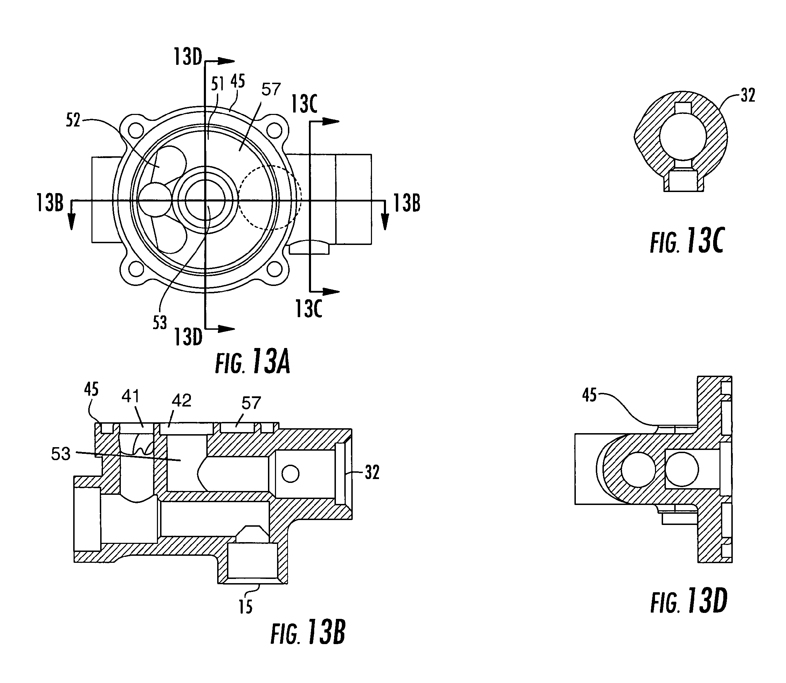

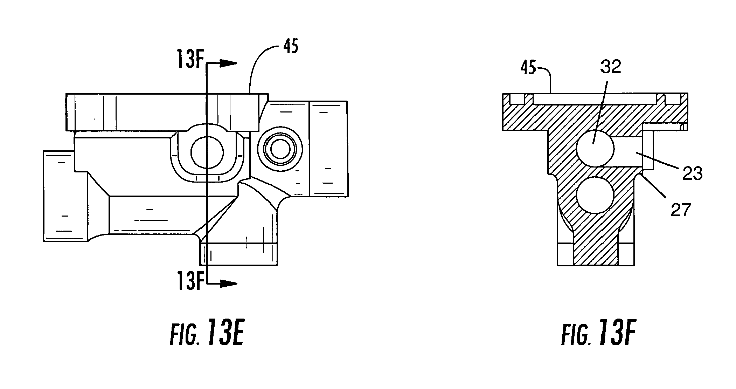

As will be described in greater detail hereinafter, the valve assembly 10 is preferably provided with a drain port 23 extending through a body 45 of the valve assembly 10 to communicate with the outlet 32, between the control valve 40 and the outlet shutoff valve 30, and as can be seen more clear in Figs. 13E and 13F. The body 45 is preferably provided with a shoulder 27 formed integrally therein, through which shoulder 27 the drain port 23 extends. The shoulder 27 provides a greater depth of material for the drain port 23, in order to allow a sufficient length of thread (not shown) to be cut into the drain port 23 for receiving and retaining a drain plug 25 therein. The drain plug 25, when located seals the drain port 23. The drain port 23 can be used, by opening the drain plug 25 when both the inlet shutoff valve 12 and outlet shutoff valve 30 are closed, to allow any water contained internally of the valve assembly 10 to be drained therefrom prior to servicing the valve assembly 10.

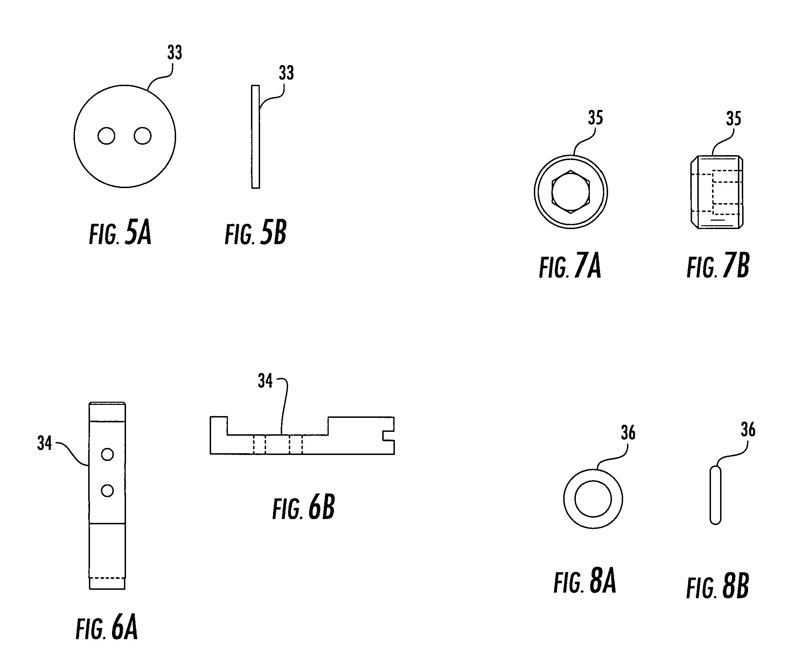

Referring to Fig. 2, the outlet shutoff valve 30 is fitted within an end 31 of the outlet 32. In one embodiment, the outlet shutoff valve 30 comprises a butterfly valve. The outlet shutoff valve 30 includes outlet shutoff butterfly disc 33, butterfly axle 34 to which the disc 33 is mounted and which projects through the body 45 of the valve assembly 10. Mounted to the external end of the axle 34 is a butterfly screw 35 which enables the axle 34 to be rotated from an exterior of the valve assembly 10. The outlet shutoff valve 30 also comprises a butterfly O-ring 36 providing a seal between the axle34 34 and the body 45 of the valve assembly 10, as shown in Figs. 4-8. In use the butterfly screw 35 can be adjusted to rotate the disc 33 in order to selectively exposed or occlude the outlet 32 so as to close outlet 32 and prevent back flow into valve assembly 10. Although in the embodiment illustrated the axle 34 and screw 35 extend, in use, horizontally, it is preferred if the axle 34 is positioned within the outlet 32 such as to extend, when the valve assembly 10 is fitted to a radiator or the like, in a substantially vertical orientation. In this way the butterfly screw 35 would be positioned on the top surface, as opposed to on the side of, the outlet 32. This allows the valve assembly 10 to be fitted to both the left and right hand side of a radiator while still allowing access to the butterfly screw 35 in order to permit closure of the outlet shutoff valve 30.

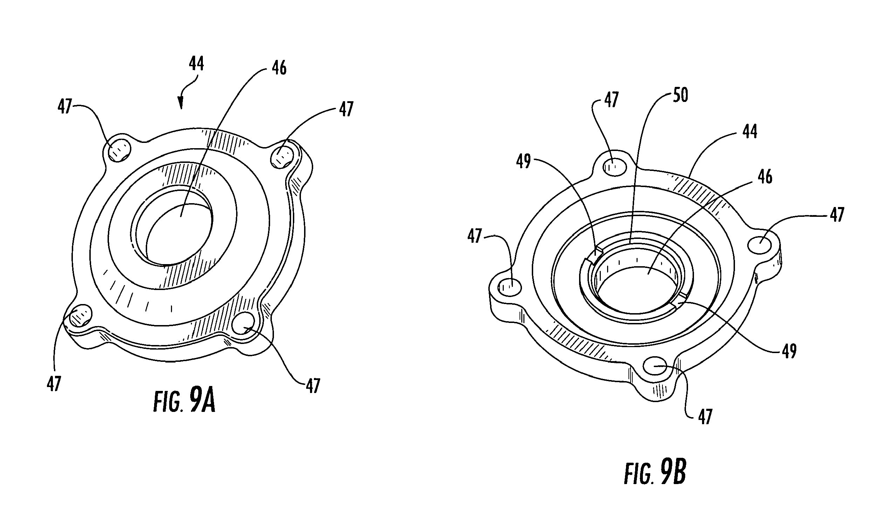

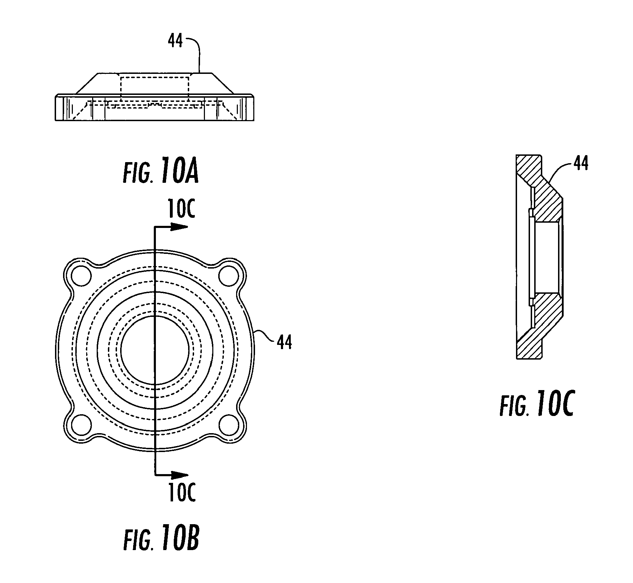

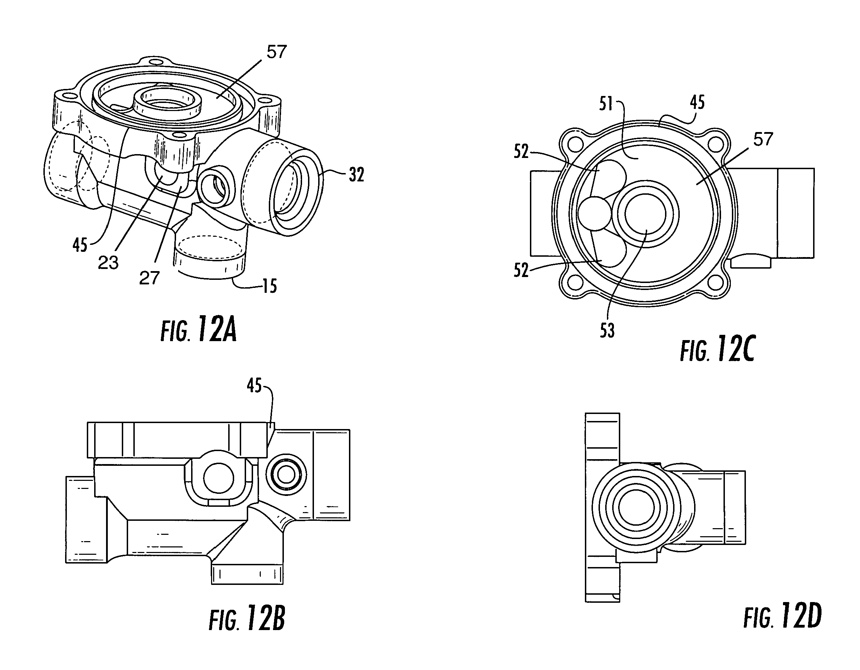

Referring to Figs. 9-13, the control valve 40 is fitted between an end 41 of the inlet 15 and an entrance or end 42 of the outlet 32. The end 41 of the inlet 15 and the end 42 of the outlet 32 are preferably formed integrally with the valve body 45. In the preferred embodiment illustrated the end 42 of the outlet 32 is in the form of an upstanding rim 42. Control valve 40 is disposed between a body cap 44 which in use is securely fitted onto the valve body 45. The body cap 44 includes a central opening 46 which provides access to the control valve 40 for reasons set out hereinafter, and one or more openings 47, as shown in Figs. 9 and 10. The openings 47 receive respective coupling members in the form of bolts 48 for coupling the body cap 44 to the valve body 45, as shown in Fig. 1. One or more notches 49 are formed in ring 50 around central opening 46. These notches 49, as will be described hereinafter, act to lightly relieve pressure buildup in the control valve 40 when in the closed position by permitting a small flow of fluid across the control valve 40 when closed.

The inlet 15 opens onto an upper surface 51 of valve body 45, a flared or funneled portion 52 providing a transition from the inlet 15 into the control valve 40, as will be described hereinafter. The funneled portion 52 slopes outwardly from the end 41 of the inlet 15 in order to aid flow of fluid into the control valve 40. The funneled portion 52 preferably has an elliptical shape. Extending from the control valve 40, beneath the rimmed end 42, is a central bore 53 which forms part of the outlet 32.

The control valve 40 comprises a diaphragm 55 which is positioned between the body cap 44 and valve body 45. The outer rim of the diaphragm 55 is clamped between the body cap 44 and the valve body 45. The diaphragm 55 divides the area between the body cap 44 and valve body 45 into an upper chamber 56 and a lower chamber 57. The lower chamber 57 is formed integrally in the upper surface 51 of the valve body 45. The inlet 15, and more particularly the funneled portion 52 opens into the lower chamber 57, which is disposed substantially concentrically about the end 42 of the outlet 32. The diaphragm 55, when in a closed on non-deformed state, lies flat across the ends 41, 42, thereby sealing the inlet 15 from the outlet 32 and so preventing fluid flow through the valve assembly 10. The diaphragm 55 may be deformed upward in order to allow flow between the ends 41, 42 and so fluid flow through the valve assembly 10. The valve assembly 10 is therefore provided with an actuator in the form of a plunger 58 which may be raised and lowered by a bi-stable solenoid 59 to raise and lower the diaphragm 55 between the open position allowing flow through control valve 40 and the closed position shutting off flow through control valve 40.

The solenoid 59 is mounted to the body cap 44 and the plunger 58 may be displaced through the central opening 46 in the cap 44. The diaphragm 55 comprises a central aperture 60 which facilitates connection of the diaphragm 55 to the plunger 58. When the diaphragm 55 is connected to the plunger 58, preferably via a rivet (not shown) positioned on the underside of the diaphragm 55 and projecting through the central aperture 60 into the plunger 58, the central opening 60 is substantially sealed and essentially no fluid can flow therethrough. In the preferred embodiment illustrated a helical spring (not shown) is fixed at one end to the lower end of the plunger 58 and is positioned concentrically around the plunger 58, the upper end of the spring abutting against the base of the solenoid 59. A large washer (not shown) is positioned between the free end of the plunger 58 and the diaphragm 55. When the diaphragm 55 is in the closed position this washer (not shown) contacts the underside of the body cap 44 and thus isolates the central aperture 60 in the diaphragm 55 from the upper chamber 56. However, the notches 49 provide a narrow path between the upper chamber 56 and the central aperture 60, allowing a small trickle of fluid to flow therebetween in order to provide pressure relief when the control valve 40 is closed.

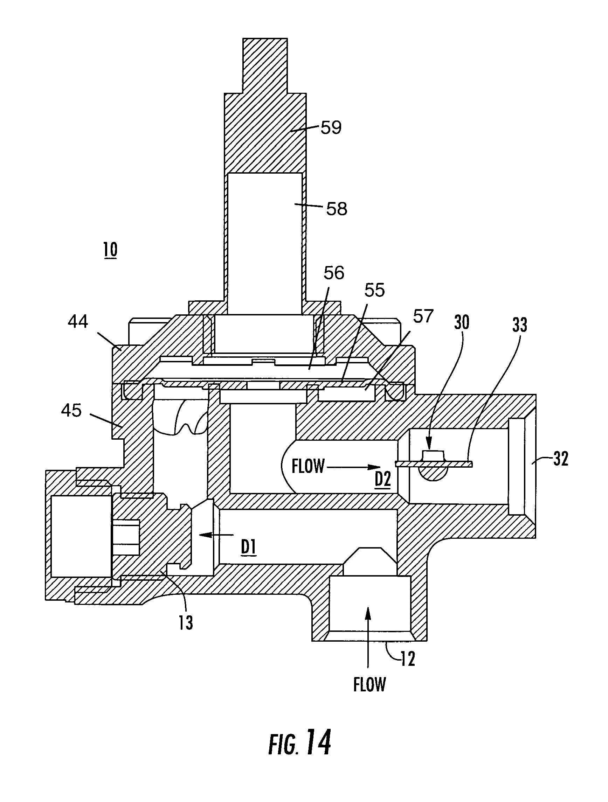

During operation of the control valve 40 the bi-stable solenoid 59 is actuated to lift the plunger 58 to deform the diaphragm 55 upwardly and so open the control valve 40 in a first polarization and thereafter the polarization is reversed to allow the plunger 58 to drop and close control valve 40. The spring (not shown) surrounding the plunger 58 is a non-biasing spring in that it does not assist in displacing the plunger 58, but rather serves to ensure that the plunger 58 settles in the correct position within the solenoid 59 after each actuation thereof. However the control valve 40 is pilot assisted, in that the pressure exerted by water on the underside of the diaphragm 55 helps to raise the diaphragm 55 into the open position. Similarly, the pressure exerted by the water passing through the offset aperture 61 into the upper chamber 56 helps to displace the diaphragm 55 downwardly into the closed position. In order to improve the seal provided by the diaphragm 55 when in the closed position, the underside thereof is provided with an annular recess 62 which is shaped and dimensioned to receive the rimmed end 42, as can be seen for example in Fig. 14.

It will be appreciated that when the control valve 40 is closed, for example when a radiator is turned off, there will be pressure being exerted on the underside of the diaphragm 55 from the fluid in the inlet 15. As the inlet flows into the lower chamber 57 this pressure will be exerted around the full circumference of the diaphragm 55. In order to prevent this pressure from partially lifting the diaphragm and so allowing flow through the control valve 40, the control valve 40 is adapted to equalize the pressure on the underside and topside of the diaphragm 55. Thus the diaphragm 55 comprises an eccentrically located aperture 61 therein, which is positioned to overlie the lower chamber 57. Thus when the diaphragm 55 is in the closed position water from the lower chamber 57 can flow through the aperture 61 to fill the upper chamber 56 so equalizing the pressure on the diaphragm 55. However as the central opening 60 in the diaphragm 55 is fully sealed by the connection to the plunger 58, none of the fluid in the upper chamber 56 can drain downwardly into the outlet 32.

Referring to Fig. 14, during operation of valve assembly 10 in a fully open position plug 13 of the inlet shutoff valve 12 is opened away from the shoulder 14 to allow flow in the direction of arrow D₁ from inlet 15 past plug 13. Butterfly valve 30 is rotated to place butterfly disc 33 in a substantially horizontal position to allow flow in the direction of arrow D₂ past butterfly disc 33. The control valve 40 can then be used to permit or prevent fluid flow through the valve assembly 10, and so for example determine when a radiator is turned on or off.

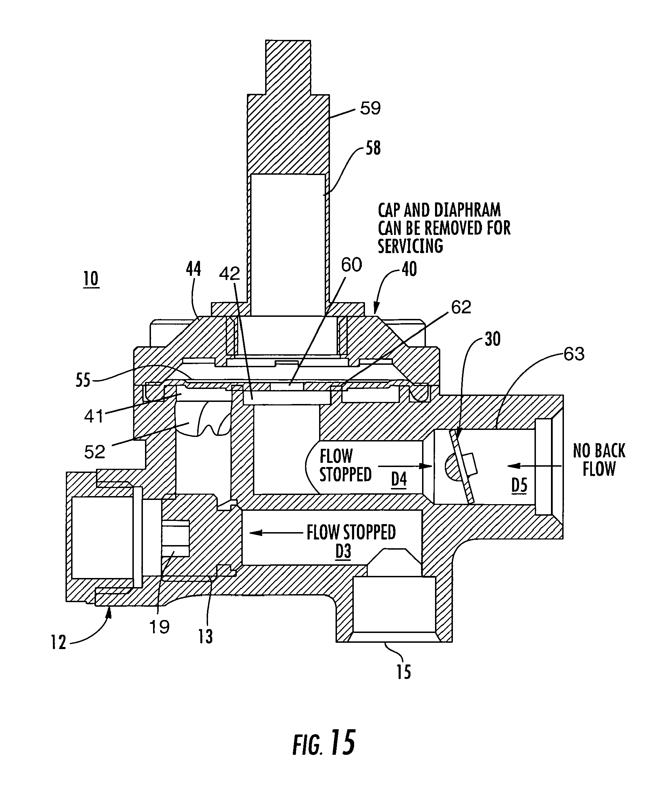

Referring to Fig. 15, during operation of the valve assembly 10 in a fully closed position, the plug 13 is advanced into abutting engagement with the shoulder 14 in order to close the inlet 15 and prevent fluid flowing in the direction of arrow D₃. Butterfly valve 30 is rotated to place butterfly disc 33 in a substantially diagonal position or vertical position to contact edge 63 of outlet 32 to stop flow in the direction of arrow D₄ and prevent backflow in the direction of arrow D₅ into outlet 32. In the closed position, body cap 44, diaphragm 55 and plunger 58 can be removed from valve assembly 10 for servicing.

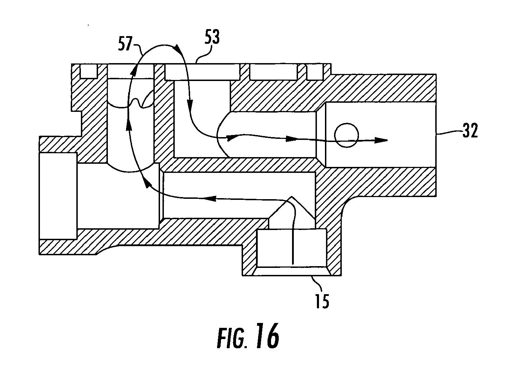

Referring to Fig. 16, during operation of the control valve 40 in an open position, flow enters lower chamber 57 of control valve 40 and proceeds through the central bore 53 to the outlet 32.

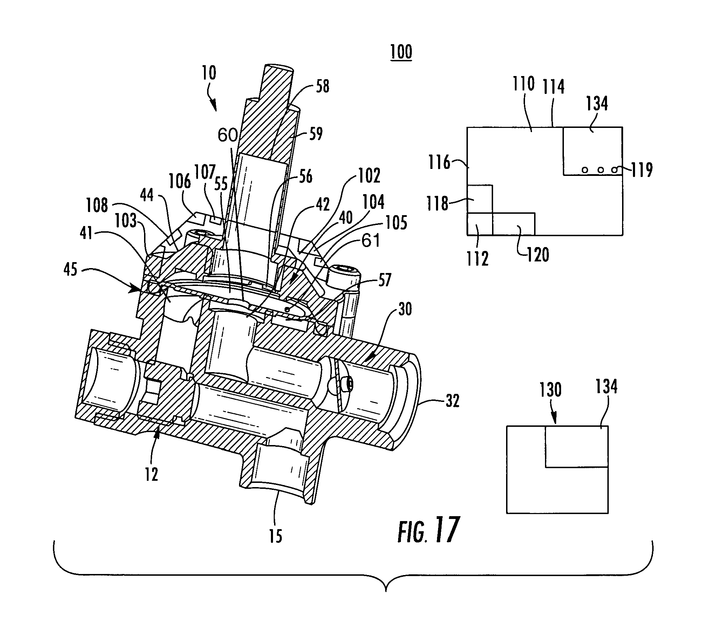

Fig. 17 is a schematic diagram of a valve control system 100 which preferably forms part of the valve assembly 10. A valve controller 102 is preferably coupled to the body cap 44. The valve controller 102 can be a solar powered device. The valve controller 102 comprises electronic devices including a solar panel 103, battery pack 104, such as, 4.8 volt, an addressable transceiver module 105, such as 433.9 Mhz, a single chip microcomputer 106, high efficiency voltage regulator 107, such as 3.3 volt, and a switch mode power supply 108. The valve controller 102 controls the bi-stable solenoid 59.

The valve controller 102 operates by requesting the status of the control valve 40 on a regular basis from the main control unit 110. The valve controller 102 can operate by switching from an extreme low power state to powered state at a specific time, for example, approximately every five minutes. When in the powered states, the single chip microcomputer 106 sends a request to the main control unit 110 for the state of the control valve 40 across transceiver module 105. The main control unit 110 responds with the required status of the control valve 40, if the control valve 40 is not in the required state, the single chip microcomputer 106 switches on the switched mode power supply 108 to operate a valve coil to change the state of the solenoid 59 to the required state resulting in the control valve 40 opening or closing as requested. After this operation, valve controller 102 acknowledges the operation by sending the current room temperature back to the main control unit 110 for display. When the operation is complete, the single chip microcomputer 106 switches off transceiver module 105 and switched mode power supply 108 to minimize the supply current from battery pack 104. During this off period, the supply current is extremely low and allows battery pack 104 to be recharged by ambient light in the room using solar panel 103. Solenoid 59 being of the bi-stable type allows the control valve 40 to remain in the open or closed state without requiring any battery current. As each valve controller 102 is assigned a unique address, each valve state can be controlled individually. All valve control is done without wires using low power radio frequency remote control. All functionality of the valve control is done using a programmable processor that is programmed to conserve as much energy as possible.

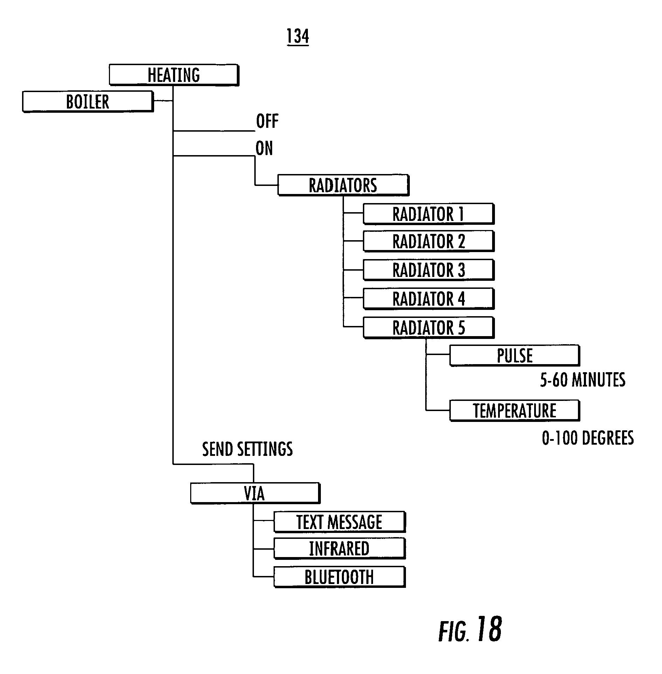

The main control unit 110 comprises components including main power supply unit 112, liquid crystal display 114, embedded (PC) 116, addressable transceiver module 118, such as 433.9 Mhz, control buttons 119, and GSM module 120. Main control unit 110 contains embedded (PC) 116 that communicates wirelessly to all control valve 40 transceiver modules 105. The main control unit 110 is therefore capable of controlling the heating system with features such as independent on/off control of each room radiator; independent day of week and time control for each room radiator; remote operation and programming of heating system; and remote operation of room control valves. Panel 134 can be associated with the main control unit 110, as shown in Fig. 18.

The control valve 40 can be controlled remotely with remote controller 130. The remote controller 130 can be a mobile phone and/or computer or any other suitable device. The panel 134 can be associated with the remote controller 130, as shown in Fig. 18. Pulse system accessed by panel 134 allows the user to maintain whatever temperature is desired on each individual radiator.

Remote controller 130 operating from a mobile phone can activate as part of the valve control system a program that can allow the user to control the heating system using a smart messaging system (SMS). The user selects a number of settings such as heating system immediately on/off; timed switch on; on duration; and selection of rooms to heat or not. On selecting the send command button, the program sends the request to the main control unit 110 to process the required actions, when main control unit 110 has processed the required actions, main control unit 110 response by sending to remote controller 130, mobile phone, the current temperature of each room and the heating system status.

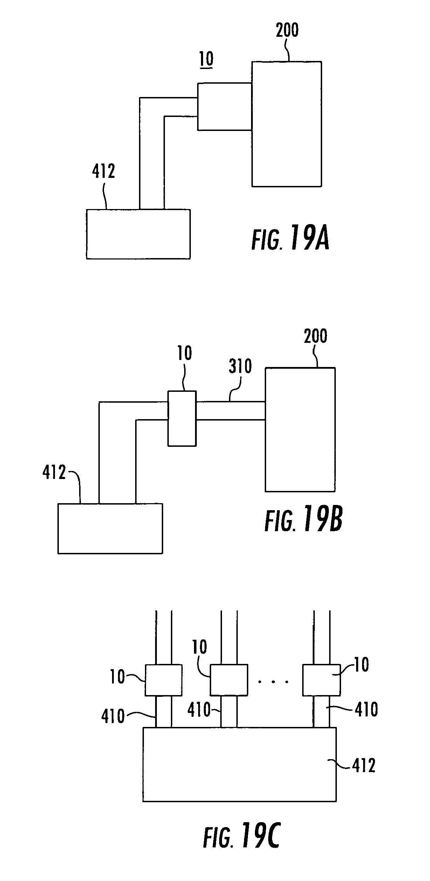

Fig. 19A illustrates use of the valve assembly 10 coupled to a radiator 200. Fig. 19B illustrates use of the three-in-one valve assembly 10 coupled to an inlet line 310 to radiator 200. Fig. 19C illustrates use of the three-in-one valve assembly 10 at outlets 410 of boiler manifold 412.

In general, the valve assembly 10 and control system of the present invention is a very versatile system. It is capable of various methods of controlling a heating system within a building, it requires no installation or wires to each valve minimizing installation and maintenance costs. The valve assembly 10 and control system of the present invention is capable of saving considerable amounts of heating energy by isolating rooms individually on a timed basis when not in use. The valve assembly 10 and control system of the present invention also provides a method to remotely control the heating system from a mobile phone or the like.

## Claims

1. A valve assembly comprising an inlet and an outlet; an inlet shutoff valve for shutting off flow through the inlet; an outlet shutoff valve for shutting off flow through the outlet; and a control valve for permitting and preventing flow between the inlet and the outlet.

2. The valve assembly of claim 1 wherein the inlet shutoff valve comprises a plug movably mounted at least partially within said inlet.

3. The valve assembly of claim 1 or 2 wherein the outlet shutoff valve comprises a butterfly valve.

4. The valve assembly of any of claims 1 to 3 wherein the control valve comprises a diaphragm valve.

5. The valve assembly of claim 4 wherein the diaphragm valve comprises a diaphragm positioned within a body of the valve assembly and displaceable between open and closed positions respectively permitting and preventing flow between the inlet and the outlet of the valve assembly.

6. The valve assembly of claim 5 wherein the diaphragm defines an upper chamber and a lower chamber within the valve body.

7. The valve assembly of claim 5 or 6 further comprising a bi-stable solenoid coupled to the diaphragm, said bi-stable solenoid being actuatable to displace the diaphragm between the open and closed positions.

8. The valve of any of claims 5 to 7 wherein the diaphragm includes an aperture positioned to enable fluid flow from the inlet to pass between said lower chamber and said upper chamber for equalizing pressure on either side of the diaphragm.

9. The valve of any preceding claim further comprising a remote controlled control system for operating the control valve.

10. The valve of claim 9 wherein the control system comprises a valve controller coupled to the control valve and a main control unit communicating to the valve control unit.

11. The valve unit of claim 10 further comprising a remote control unit, the remote control unit communicating with the main control unit.

12. The valve of claim 11 wherein the main control unit communicates wirelessly to the valve controller and/or the remote controller.
